# EUROPÄISCHE PATENTANMELDUNG

(11) **EP 4 260 933 A1**
(43) Veröffentlichungstag der Anmeldung: **18.10.2023**
(21) Anmeldenummer: 22020160.2
(22) Anmeldetag: 11.04.2022
(51) Int. Cl.: B01J 8/00, B01J 8/06, G01J 5/00

(54) **VERFAHREN UND VORRICHTUNG ZUM BESTIMMEN EINER TEMPERATUR EINES REAKTIONSROHRS EINES REAKTORS**

(71) Anmelder: Linde GmbH, 82049 Pullach (DE)
(72) Erfinder: Mihailowitsch, Dieter, 82049 Pullach (DE); Hölzl, Reinhold, 82049 Pullach (DE); Dittmar, Benjamin, 82049 Pullach (DE); Köpf, Hubert, 82049 Pullach (DE); Pöllmann, Josef-Andreas, 82049 Pullach (DE); Hoffmann, Rainer, 82049 Pullach (DE)
(74) Vertreter: Fischer, Werner

(57) **Zusammenfassung**

Die vorliegende Erfindung betrifft ein Verfahren zum Bestimmen einer Temperatur eines Reaktionsrohrs (220) eines Reaktors (200), welches zumindest teilweise innerhalb einer Brennkammer (210) eines Ofens angeordnet ist, aufweisend die Schritte Versehen einer vorgegebenen Position des Reaktionsrohrs (220) mit einem Kalibrierelement (230), wobei dieses Kalibrierelement (230) einen vorgegebenen Emissionskoeffizient aufweist; Erfassen einer Temperatur des Kalibrierelements (230) mit einem Temperaturerfassungselement (240), welches in einer Wand (215) der Brennkammer (210) des Ofens angeordnet ist; Bestimmen der Temperatur des Reaktionsrohrs (220) in Abhängigkeit von der erfassten Temperatur des Kalibrierelements (230).

## Beschreibung

Die Erfindung betrifft ein Verfahren und eine Vorrichtung zum Bestimmen einer Temperatur eines Reaktionsrohrs eines Reaktors, welches zumindest teilweise innerhalb einer Brennkammer eines Ofens angeordnet ist, sowie einen Reaktor mit einer derartigen Vorrichtung.

### Stand der Technik

In einer Reihe von Verfahren in der chemischen Industrie werden Reaktoren eingesetzt, in denen ein oder mehrere Reaktanden durch beheizte Reaktionsrohre bzw. Reaktorrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beispielsweise ist die Dampfreformierung, insbesondere von Methan, eine weit verbreitete und etablierte Technologie zur Herstellung von Synthesegas. Bei der Dampfreformierung handelt es sich um eine allotherme Reaktion, die z.B. im Falle von Erdgas bzw. Methan als Einsatz gemäß der folgenden Reaktionsgleichung in Gegenwart eines geeigneten Katalysators abläuft: CH₄ + H₂O → CO + 3H₂. Zur Durchführung kann heißer Wasserdampf mit dem zu reformierenden Einsatz (zum Beispiel Erdgas bzw. Methan) vermischt und unter ständiger Energiezufuhr, die durch Verbrennen eines Brennstoffes bereitgestellt werden kann, in Gegenwart des Katalysators in der Gasphase zu Synthesegas bzw. Wasserstoff umgesetzt werden.

Die Erfindung eignet sich für alle derartigen Verfahren und Ausgestaltungen von Reaktionsrohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre entsprechender Reaktoren können durch Verwendung von Brennern beheizt werden. Zu diesem Zweck werden die Reaktionsrohre durch die Brennkammer eines Ofens geführt, in welcher eine Vielzahl von Brennern vorgesehen sein kann, die einen Brennstoff in Gegenwart von Sauerstoff verbrennen, so dass die entstehende Wärme auf die Reaktionsrohre übertragen wird. Beispielsweise können beim Steamcracken die Reaktionsrohre in Form von Rohrschlangen (engl. Coils) durch die Brennkammer geführt werden, wobei diese Rohre in der Brennkammer zumeist einen Umkehrbogen aufweisen. Bei der Dampfreformierung werden typischerweise geradlinige Rohre verwendet, die ohne Umkehrbogen durch die Brennkammer verlaufen.

Für einen korrekten und effizienten Betrieb eines derartigen Reaktors ist es von Bedeutung, Temperaturen der Reaktionsrohre, insbesondere deren Rohrwandtemperaturen, möglichst genau bestimmen zu können, insbesondere da diese Temperaturen die Lebensdauer der Rohrmaterialien und somit der Rohre selbst erheblich beeinflussen können.

### Offenbarung der Erfindung

Vor diesem Hintergrund werden ein Verfahren und eine Vorrichtung zum Bestimmen einer Temperatur eines Reaktionsrohrs eines Reaktors sowie ein Reaktor mit einer derartigen Vorrichtung mit den Merkmalen der unabhängigen Patentansprüche vorgeschlagen. Vorteilhafte Ausgestaltungen sind Gegenstand der Unteransprüche sowie der nachfolgenden Beschreibung. Vorteile und vorteilhafte Ausgestaltungen des erfindungsgemäßen Verfahrens, der erfindungsgemäßen Vorrichtung und des erfindungsgemäßen Reaktors ergeben sich aus der vorliegenden Beschreibung in entsprechender Weise.

Als Reaktor sei in dem vorliegenden Zusammenhang insbesondere eine Anlage zur Durchführung einer chemischen Reaktion in einem Prozessfluid zu verstehen, wobei ein oder mehrere Reaktanden durch das entsprechende Reaktionsrohr geführt und dort katalytisch oder nichtkatalytisch umgesetzt werden. Das Reaktionsrohr bzw. Reaktorrohr oder Reformerrohr des Reaktors ist zumindest teilweise bzw. abschnittsweise, insbesondere vertikal oder zumindest im Wesentlichen vertikal, innerhalb einer Brennkammer eines Ofens angeordnet, insbesondere innerhalb eines (Ofen-) Gehäuses bzw. einer Gehäusewand des Ofens. Diese Brennkammer stellt insbesondere einen Reaktorraum bzw. eine Reaktorbox dar und wird durch entsprechende Ofenwände bzw. Reaktorwände umschlossen. Auch ein Spaltofen, bei dem die Rohre ("coils") sich in alle Raumrichtungen ausdehnen können, soll vorliegend als "Reaktor" bezeichnet werden.

Im Rahmen der vorliegenden Erfindung wird, insbesondere vor einem regulären Betrieb des Ofens, eine vorgegebene bzw. ausgewählten Position bzw. eine Kalibrier-Position des Reaktionsrohrs mit einem Kalibrierelement versehen, wobei dieses Kalibrierelement einen vorgegebenen bzw. bekannten Emissionskoeffizient aufweist. Besonders zweckmäßig kann dieses Kalibrierelement auf einer Oberfläche einer Wand des Reaktionsrohrs aufgebracht und/oder in diese Wand des Reaktionsrohrs eingebracht werden.

Eine Temperatur bzw. Kalibrier-Temperatur dieses Kalibrierelements wird mit einem Temperaturerfassungselement erfasst, insbesondere während eines regulären Betriebs des Ofens, wobei dieses Temperaturerfassungselement in oder an einer Wand der Brennkammer des Ofens angeordnet ist, insbesondere in einer Öffnung in der Wand. Als Temperaturerfassungselement kann besonders zweckmäßig ein Sensor zur berührungslosen Temperaturmessung verwendet werden, insbesondere ein Pyrometer bzw. Strahlungsthermometer, welches eine emittierte Wärmestrahlung erfassen und auswerten kann.

In Abhängigkeit von der erfassten Temperatur bzw. Kalibrier-Temperatur des Kalibrierelements wird die Temperatur des Reaktionsrohrs, insbesondere an der vorgegebenen Position, bestimmt. Insbesondere kann die bestimmte Temperatur des Kalibrierelements selbst als Temperatur des Reaktionsrohrs an der vorgegebenen Position angenommen werden. Ferner kann die bestimmte Temperatur des Kalibrierelements zweckmäßigerweise verwendet werden, um die Temperatur des Reaktionsrohrs an weiteren Positionen zu bestimmen.

Reaktionsrohre von Reaktoren stellen zumeist graue Strahler dar, welche einen Teil der auftreffenden Wärmestrahlung absorbieren und einen anderen Teil reflektieren. Oftmals weisen Reaktionsrohre einen unbekannten oder variablen Emissionskoeffizienten auf. Als Emissionskoeffizient bzw. Emissionsfaktor oder Emissionsgrad ε sei im Allgemeinen eine dimensionslose Größe 0 ≤ ε≤1 zu verstehen, welche beschreibt, wie viel thermische Strahlung bzw. Wärmestrahlung ein Körper abgibt. Bei einem Emissionsgrad mit dem Wert Null absorbiert der Körper keine Wärmestrahlung. Bei einem Emissionsgrad mit dem Wert Eins absorbiert der Körper hingegen alle auftreffende Wärmestrahlung.

Aufgrund unbekannter oder variabler Emissionskoeffizienten von Reaktionsrohren sowie ferner aufgrund weiterer Variablen, z.B. dem Strahlungseinfluss der Brennerflammen in der Brennkammer, können Temperarturmessungen der Oberfläche von Reaktionsrohen herkömmlicherweise oftmals mit großen Unsicherheiten behaftet sein. Ferner können herkömmlicherweise oftmals keine festen Messstellen zur Temperaturmessung von Reaktionsrohren in Reaktoren vorhanden sein. Zwar können herkömmlicherweise manuelle Temperaturmessungen z.B. mittels Handpyrometer durchgeführt werden, jedoch können auch derartige Messungen aufgrund unterschiedlicher Variablen, z.B. unterschiedlicher Bediener und unterschiedlicher Messstellen, ebenfalls sehr ungenau sein.

Der Erfindung liegt nun die Erkenntnis zugrunde, eine speziell ausgewählte Kalibrier-Position des Reaktionsrohrs mit dem Kalibrierelement mit bekannter Absorptionscharakteristik auszustatten und mittels dem in der Brennkammerwand fest angeordneten Temperaturerfassungselements berührungslos zu vermessen. Da der Emissionskoeffizient des Kalibrierelement bekannt ist, kann abhängig von der von dem Kalibrierelement emittierten, mit dem Temperaturerfassungselement erfassten Wärmestrahlung, insbesondere von deren Intensität und spektralen Verteilung, auf die tatsächliche, aktuelle Temperatur der Reaktionsrohroberfläche an der vorgegebenen Kalibrier-Position rückgeschlossen werden.

Das Temperaturerfassungselement kann besonders zweckmäßig fest bzw. dauerhaft in der Brennkammerwand angeordnet werden, so dass eine regelmäßige oder dauerhafte Bestimmung der aktuellen Temperatur der Reaktionsrohrwand während des Betriebs des Ofens bzw. Reaktors ermöglicht wird. Insbesondere kann das Temperaturerfassungselement in einer ohnehin in der Brennkammerwand vorhandenen Öffnung vorgesehen werden, z.B. in einem Sichtfenster oder einer Schautür.

Ferner kann besonders zweckmäßig abhängig von der bestimmten Temperatur des Kalibrierelements bzw. abhängig von dem daraus abgeleiteten Wissen über die Wärmeabstrahlungscharakteristik des Reaktionsrohrs, mit Hilfe des Temperaturerfassungselements oder mit Hilfe weiterer Temperaturerfassungselemente die Temperatur der Reaktionsrohroberfläche an weiteren Positionen bestimmt werden. Zweckmäßigerweise kann auf diese Weise ein Verlauf oder eine Verteilung der Temperatur an verschiedenen Rohrposition bzw. entlang der Rohroberfläche bestimmt werden.

Die vorliegende Erfindung ermöglicht somit eine genaue und kontinuierliche Bestimmung der Reaktionsrohrtemperatur sowie ferner insbesondere die Bestimmung einer Historie bzw. eines zeitlichen Verlaufs der Temperatur während des Betriebes des Reaktors. Abhängig von der bestimmten Temperatur kann besonders zweckmäßig die Lebensdauer bzw. die verbleibende (Rest-) Lebensdauer des Reaktionsrohrs und insbesondere des gesamten Reaktors bestimmt werden. Mit der genauen Kenntnis der verbleibenden Lebensdauer kann das Reaktionsrohr so lange wie möglich betrieben werden, bevor das Rohr am Ende der Lebensdauer ausgetauscht wird. Es ist somit beispielsweise nicht nötig, das Reaktionsrohr aus Sicherheitsgründen aufgrund unbekannter verbleibender Lebensdauer nach einem vorgegebenen Zeitintervall auszutauschen. Somit ergeben sich große Einsparpotentiale, da das Reaktionsrohr erst zu einem späteren Zeitpunkt gewechselt werden muss und somit noch länger betrieben werden kann. Reparatur-, Wartungs- bzw. Austauschintervalle können zweckmäßigerweise erhört werden und damit verbundene Kosten können reduziert werden. Ferner wird ein schnelleres Reagieren bei unvorhergesehenen Ereignissen ermöglicht, beispielsweise bei dem Auftreten von lokalen heißen Stellen ("local hot spots").

Insbesondere hat ein heißester Punkt des Reaktionsrohrs besonders starken Einfluss auf die Lebensdauer des Rohrmaterials. Mit Hilfe der vorliegenden Erfindung können besonders zweckmäßig Temperaturen an verschiedenen Positionen des Reaktionsrohrs bestimmt werden und die Position mit der größten Temperatur kann identifiziert werden. Durch Kenntnis dieser Position und dieser größten Temperatur kann die verbleibende Lebensdauer besonders präzise und effektiv bestimmt werden.

Auf herkömmliche Weise werden Reaktoren aufgrund nicht genau bekannter Rohroberflächentemperaturen oftmals nicht unter Designbedingungen z.B. im Hinblick auf Druck und Temperatur betrieben, welche von einem Hersteller vorgegebenen werden können. Stattdessen werden Reaktoren oftmals mit gewissen Sicherheitsabständen zu derartigen Designbedingungen betrieben, um eine Beschädigung der Rohre zu vermeiden. Beispielsweise werden herkömmliche Reaktoren oftmals unter einem Druck betrieben, der geringer ist als ein vorgegebener Maximaldruck, welcher von einem Hersteller als sicher erachtet wird. Durch Bestimmen der genauen, aktuellen Rohrwandtemperatur im Rahmen der vorliegenden Erfindung kann der Reaktor besonders zweckmäßig möglichst nahe an einer Designgrenze bzw. an vorgegebenen Designbedingungen betrieben werden, z.B. im Hinblick auf Druck und Temperatur. Auf diese Weise lassen sich insbesondere Produktionssteigerungen und erhöhte Produktionskapazitäten erzielen.

Ferner wird das Einhalten bzw. das Nicht-Überschreiten einer Designtemperatur auf herkömmliche Weise oftmals von einer in der Prozessrechnung berechneten Rauchgas- und Synthesegasaustrittstemperatur abgeleitet. Durch genaues Bestimmen der aktuellen Rohrwandtemperatur im Rahmen der vorliegenden Erfindung kann der Reaktor möglichst nahe und möglichst präzise an einer vorgegebenen Designtemperatur betrieben werden.

Es versteht sich, dass der Reaktor noch weitere Komponenten aufweisen kann, insbesondere eine Anzahl an weiteren Reaktionsrohren sowie ferner beispielsweise Eintritts- bzw. Austritts-Sammelleitungen (sog. Header), welche jeweils zumindest teilweise innerhalb oder außerhalb des Ofens angeordnet sein können. Besonders zweckmäßig weist der Reaktor eine Vielzahl von parallel zueinander verlaufenden Reaktionsrohren auf, wobei die Temperatur eines oder mehrerer dieser Vielzahl von Reaktionsrohren im Rahmen der vorliegenden Erfindung bestimmt werden kann. Beispielsweise können zu diesem Zweck mehrerer dieser Rohre oder auch alle Rohre jeweils wenigstens ein Kalibrierelement aufweisen, welche mittels des Temperaturerfassungselements oder auch weiterer derartiger Temperaturerfassungselemente vermessen werden.

Ferner können in der Brennkammer, insbesondere in einer oder mehreren Wänden der Brennkammer, zweckmäßigerweise ein Brenner oder mehrere Brenner angeordnet sein. Diese Brenner können einen Brennstoff in Gegenwart von Sauerstoff verbrennen, so dass thermische Energie erzeugt und auf das Reaktionsrohr bzw. auf die Reaktionsrohre übertragen werden kann, um eine benötigte Aktivierungsenergie für die ablaufende chemische Reaktion innerhalb der Reaktionsrohre zu erreichen bzw. zu überwinden.

Gemäß einer besonders vorteilhaften Ausgestaltung wird die vorgegebene Position des Reaktionsrohrs mit einem schwarzen Körper als das Kalibrierelement versehen oder mit einem Kalibrierelement, das sich zumindest im Wesentlichen wie ein schwarzer Körper verhält, vorteilhafterweise mit einem Hohlraumstrahler und/oder einem Flächenstrahler. Der Hohlraumstrahler kann beispielsweise durch eine Bohrung in der Wand des Reaktionsrohrs erzeugt werden. Der Flächenstrahler kann beispielsweise durch gezielte Modifikation der Oberfläche des Reaktionsrohrs erzeugt werden, z.B. durch Aufbringen einer speziellen Farbe, Erzeugen einer Rauheit, usw.

Ein schwarzer Körper bzw. schwarzer Strahler oder planckscher Strahler ist eine idealisierte thermische Strahlungsquelle, welche alle elektromagnetische Strahlung im gesamten Wellenlängenbereich vollständig absorbiert und einen Emissionskoeffizient von ε = 1 aufweist. Als Wärmestrahlung sendet ein schwarzer Körper eine elektromagnetische Strahlung aus, deren Intensität und spektrale Verteilung durch das Plancksche Strahlungsgesetz beschrieben werden und von der weiteren Beschaffenheit des Körpers und seiner Oberfläche unabhängig sind, sondern nur von seiner Temperatur abhängen.

Vorteilhafterweise besitzt der vorgegebene bzw. bekannte Emissionskoeffizient ε des Kalibrierelements den Wert eins oder zumindest im Wesentlichen eins. Das Kalibrierelement verhält sich somit zumindest annähernd wie ein schwarzer Körper. Im Falle des Hohlraumstrahlers kann durch ein hohes Verhältnis von Tiefe zu Durchmesser der entsprechenden Bohrung durch Mehrfachreflexion besonders zweckmäßig ein Emissionskoeffizient von nahezu eins erreicht werden. Auch im Falle des Flächenstrahlers kann durch Mehrfach- bzw. Gegenreflexionen ein Emissionskoeffizient von nahezu eins erreicht werden.

Durch ein derartiges Kalibrierelement, welches an oder in der Oberfläche des Reaktionsrohrs an der vorgegebenen Position vorgesehen wird und welches sich zumindest annähernd wie ein schwarzer Körper verhält bzw. einen Emissionskoeffizient von im Wesentlichen eins besitzt, sowie ferner durch Erfassen der von diesem Kalibrierelement emittierten Wärmestrahlung mit Hilfe des entsprechend kalibrierten Temperaturerfassungselements kann besonders präzise auf die Temperatur der Reaktionsrohroberfläche rückgeschlossen werden.

Vorzugsweise wird das Reaktionsrohr mit dem Kalibrierelement versehen, indem eine Bohrung in einer Wand des Reaktionsrohrs an der vorgegebenen Position erzeugt wird. Durch eine derartige von einer äußeren Oberfläche aus in die Rohrwand hinein verlaufenden Bohrung kann zweckmäßigerweise ein Hohlraumstrahler in der Wand erzeugt werden. Besonders zweckmäßig weist die Bohrung ein hohes Verhältnis von Tiefe zu Durchmesser auf, so dass ein Emissionskoeffizient von nahezu eins erreicht werden kann. Beispielsweise kann die Tiefe der Bohrung mindestens doppelt so groß wie deren Durchmesser sein, ferner beispielsweise mindestens drei Mal, vier Mal oder fünf Mal so groß.

Alternativ oder zusätzlich wird das Reaktionsrohr mit dem Kalibrierelement versehen, indem vorzugsweise ein Formkörper bzw. ein Flächenstrahlerelement auf einer Oberfläche des Reaktionsrohrs aufgebracht wird. Die Oberfläche dieses Formkörpers ist insbesondere in spezieller Weise modifiziert, beispielsweise durch Aufbringen einer speziellen Farbe oder durch Erzeugen einer vorgegebenen Rauheit, insbesondere derart, dass ein Emissionskoeffizient von nahezu eins erreicht werden. Besonders zweckmäßig stellt der Formkörper einen Flächenstrahler dar. Beispielsweise kann die Oberfläche des Formkörpers eine Aneinanderreihung regelmäßige geometrischer Formen darstellen, z.B. regelmäßig angeordnete Pyramiden.

Alternativ oder zusätzlich wird das Reaktionsrohr mit dem Kalibrierelement versehen, indem vorzugsweise die Oberfläche des Reaktionsrohrs aufgeraut wird. Zweckmäßigerweise wird die Oberfläche des Rohrs an der vorgegebenen Position durch Aufrauen derart modifiziert, dass ein Emissionskoeffizient von eins oder zumindest nahezu eins erreicht wird und an dieser Position somit ein Flächenstrahler erzeugt wird.

Alternativ oder zusätzlich wird das Reaktionsrohr mit dem Kalibrierelement versehen, indem vorzugsweise ein Ringelement auf der Oberfläche des Reaktionsrohrs aufgebracht wird und eine Bohrung in dem Ringelement erzeugt wird. Beispielsweise kann ein leicht verdickter Ring auf die Rohroberfläche aufgeschweißt bzw. eingeschweißt werden. Die Bohrung in diesem Ringelement stellt insbesondere einen Hohlraumstrahler dar.

Vorzugsweise wird als Bohrung in der Wand des Reaktionsrohrs eine Bohrung in einer radialen Richtung des Reaktionsrohrs erzeugt. Eine derartige radiale Bohrung verläuft insbesondere in einer senkrechten Ebene bzw. einer Querschnittsebene des Reaktionsrohrs, ferner insbesondere auf einen Mittelpunkt des Rohrquerschnitts bzw. auf eine zentrale Achse bzw. Längsachse zu.

Alternativ oder zusätzlich wird als Bohrung in der Wand des Reaktionsrohrs vorzugsweise eine Bohrung in einer tangentialen Richtung des Reaktionsrohrs erzeugt. Eine derartige tangentiale Bohrung verläuft insbesondere in Umfangsrichtung des Rohrs des Rohrs. Zweckmäßigerweise verläuft auch eine derartige tangentiale Bohrung in einer senkrechten Ebene bzw. einer Querschnittsebene des Reaktionsrohrs. Besonders zweckmäßig kann mit einer derartigen tangentialen Bohrung ein besonders großes Verhältnis von Tiefe zu Durchmesser erreicht werden.

Alternativ oder zusätzlich wird als Bohrung in der Wand des Reaktionsrohrs vorzugsweise eine Bohrung in radialer Richtung und in axialer Richtung des Reaktionsrohrs erzeugt. Eine derartige schräge Bohrung verläuft insbesondere unter einem vorgegebenen Winkel gegenüber der zentralen Achse bzw. Längsachse des Rohrs, ferner insbesondere in einer vertikalen Ebene bzw. einer Längsschnittebene des Reaktionsrohrs.

Wie obig erläutert kann die bestimmte Temperatur bzw. Kalibrier-Temperatur des Kalibrierelements zweckmäßigerweise als Temperatur des Reaktionsrohrs an der vorgegebenen Position angenommen werden. Alternativ oder zusätzlich kann die Kalibrier-Temperatur des Kalibrierelements auch verwendet werden, um die Temperatur des Reaktionsrohrs an einer weiteren Position zu bestimmen, wie nachfolgend erläutert werden soll.

Vorteilhafterweise wird abhängig von der erfassten Temperatur des Kalibrierelements ein Korrekturwert bestimmt. Besonders zweckmäßig kann diese Korrektur den tatsächlichen Emissionskoeffizienten des Reaktionsrohrs charakterisieren bzw. einen Unterschied zwischen den Emissionskoeffizienten des Kalibrierelements und des Reaktionsrohrs. In Abhängigkeit von diesem Korrekturwert wird vorteilhafterweise eine zweite Temperatur des Reaktionsrohrs an einer Messposition bestimmt. Diese Messposition kann zweckmäßigerweise eine beliebige Position an der Oberfläche des Reaktionsrohrs relativ zu dem Kalibrierelement sein. Insbesondere kann die erfasste Temperatur des Kalibrierelements somit als Referenz- bzw. Kalibriermessung verwendet werden, um präzise die Temperatur des Reaktionsrohrs an beliebigen Stellen zu bestimmen. Zweckmäßigerweise kann somit ein Verlauf bzw. eine Verteilung der Rohrtemperatur an verschiedenen zweiten Position entlang der Rohroberfläche bestimmt werden.

Bevorzugt wird eine nicht-korrigierte Temperatur an der Messposition des Reaktionsrohrs erfasst. Die zweite Temperatur des Reaktionsrohrs an der Messposition wird bevorzugt abhängig von der erfassten nicht-korrigierten Temperatur und von dem bestimmten Korrekturwert bestimmt. Insbesondere kann die nicht-korrigierte Temperatur ebenfalls mit dem Temperaturerfassungselement erfasst werden. Das Temperaturerfassungselement kann zu diesem Zweck insbesondere beweglich oder verstellbar sein, um Temperaturmessungen nicht nur an der vorgegebenen Position, sondern an zweckmäßigen weiteren Positionen des Reaktionsrohrs vorzunehmen. Beispielsweise kann zu diesem Zweck eine Position und/oder Ausrichtung des Temperaturerfassungselements verstellbar sein bzw. das Temperaturerfassungselements kann insbesondere schwenkbar bzw. drehbar sein. Ferner kann die nicht-korrigierte Temperatur beispielsweise auch mit einem weiteren Temperaturerfassungselement bzw. einem anderen Sensor erfasst werden, z.B. mit einem bildgebenden Strahlungsthermometer oder einem Handpyrometer.

Vorzugsweise wird eine Korrekturwerttemperatur an einer Korrekturwertposition des Reaktionsrohrs mit dem Temperaturerfassungselement erfasst, insbesondere in der Nähe des Kalibrierelements. Der Korrekturwert wird vorzugsweise abgängig von der erfassten Temperatur des Kalibrierelements und von dieser erfassten Korrekturwerttemperatur an der Korrekturwertposition bestimmt. Besonders zweckmäßig kann der tatsächliche Emissionskoeffizient des Reaktionsrohrs als Korrekturwert bestimmt werden. Das Temperaturerfassungselement wird somit zweckmäßigerweise zunächst auf das Kalibrierelement ausgerichtet, um dessen Temperatur bei dem bekannten Emissionskoeffizienten von eins (oder zumindest im Wesentlichen eins) zu erfassen. Danach wird das Temperaturerfassungselement insbesondere auf einen Ort nahe neben dem Kalibrierelement ausgerichtet, der annähernd die gleiche Temperatur wie das Kalibrierelement aufweist, um dort die Korrekturwerttemperatur zu erfassen. Aus diesen zwei Messungen, also aus der Kalibrier-Temperatur des Kalibrierelements und aus der Korrekturwerttemperatur an der Korrekturwertposition, kann besonders zweckmäßig der reale, tatsächliche Emissionskoeffizient des Reaktionsrohrs bestimmt werden.

Die erfindungsgemäße Vorrichtung ist dazu eingerichtet, eine bevorzugte Ausführungsform des erfindungsgemäßen Verfahrens durchzuführen. Die Vorrichtung weist zu diesem Zweck das Temperaturerfassungselement auf, das dazu eingerichtet ist, in einer Wand der Brennkammer angeordnet zu werden und die Temperatur bzw. Kalibrier-Temperatur des Kalibrierelements zu erfassen. Ferner weist die Vorrichtung eine Temperaturbestimmungseinheit auf, die dazu eingerichtet ist, in Abhängigkeit von der erfassten Temperatur des Kalibrierelements die Temperatur des Reaktionsrohrs zu bestimmen. Beispielsweise kann dies Temperaturbestimmungseinheit als eine Recheneinheit oder als eine Steuereinheit ausgebildet sein, etwa als ein Computer, als Mikrocontroller oder als eine Steuerung des Reaktors.

Gemäß einer besonders bevorzugten Ausgestaltung ist das Temperaturerfassungselement auf einer Verstelleinheit angeordnet, die dazu eingerichtet ist, eine Position und/oder eine Ausrichtung des Temperaturerfassungselements zu verstellen, insbesondere dessen horizontale und/oder vertikale Position bzw. Ausrichtung. Zweckmäßigerweise ist das Temperaturerfassungselement mit Hilfe der Verstelleinheit schwenkbar und/oder drehbar angeordnet, insbesondere jeweils um eine horizontale Achse und/oder eine vertikale Achse. Insbesondere kann das Temperaturerfassungselement somit relativ zu dem Kalibrierelement bzw. relativ zu der vorgegebenen Position verstellt werden, um Temperaturen an verschiedenen Messpositionen des Reaktionsrohrs zu erfassen.

Vorteilhafterweise ist das Temperaturerfassungselement derart angeordnet, dass an einer Vielzahl von verschiedenen Messpositionen des Reaktionsrohrs jeweils eine Temperatur bestimmbar ist, besonders zweckmäßig durch entsprechende Verstellung der Position und/oder Ausrichtung mit Hilfe der Verstelleinheit. Beispielsweise kann es somit ermöglicht werden, (vertikale) Temperaturprofile des Reaktionsrohrs und gegebenenfalls weiterer Reaktionsrohre zu bestimmen. Wenn beispielsweise eine Vielzahl von Reaktionsrohren wie bei Spaltöfen in allen Raumrichtungen verlaufen, können durch Ändern der horizontalen und vertikalen Position bzw. Ausrichtung des Temperaturerfassungselements zweckmäßigerweise Temperaturen an unterschiedlichen Messpositionen dieser Rohre erfasst werden. Beispielsweise kann zu diesem Zweck die Position bzw. der Verlauf des jeweiligen zu vermessenden Rohrs erfasst werden, z.B. mit Hilfe einer Kamera, und die Position bzw. Ausrichtung des Temperaturerfassungselements kann automatisch nachgefahren werden.

Bevorzugt ist das Temperaturerfassungselement dazu eingerichtet, in einer Öffnung bzw. Bohrung in der Wand der Brennkammer angeordnet zu werden. Beispielsweise kann es sich hierbei um eine ohnehin vorhandene Öffnung handeln, z.B. um ein Sichtfenster oder eine Schautüre. Insbesondere ist diese Öffnung verschließbar, z.B. mit einer Klappe oder Abdeckung. Zweckmäßigerweise kann diese Klappe bzw. Abdeckung nur für die Dauer der Temperaturmessung geöffnet und anschließend automatisch wieder geschlossen werden. Auf diese Weise können das Temperaturerfassungselement und ferner die Verstelleinheit zweckmäßigerweise vor der Hitze innerhalb der Brennkammer und vor Beschädigungen bzw. Defekten geschützt werden.

Ein erfindungsgemäßer Reaktor weist wenigstens ein Reaktionsrohr auf, sowie eine bevorzugte Ausgestaltung einer erfindungsgemäßen Vorrichtung zum Bestimmen einer Temperatur des wenigstens einen Reaktionsrohrs. Es versteht sich, dass beispielsweise nur ein Reaktionsrohr oder auch eine Vielzahl von Reaktionsrohren jeweils mit einem oder mehreren Kalibrierelementen versehen sein können. Ferner versteht sich, dass beispielsweise nur ein Temperaturerfassungselement zur Vermessung aller Reaktionsrohre vorgesehen sein kann oder auch eine Vielzahl von Temperaturerfassungselementen, welche jeweils beispielsweise ihnen zugeordnete Reaktionsrohre vermessen können.

Die vorliegende Erfindung eignet sich insbesondere für Reaktionsrohre und Reaktoren, wie sie zum Steamcracken oder zur Dampfreformierung zum Einsatz kommen. Die Erfindung kann aber auch in anderen Reaktortypen zum Einsatz kommen. Generell eignet sich die Erfindung für Reaktoren zur Durchführung aller endothermen chemischen Reaktionen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung
- Figur 1: zeigt schematisch einen Reaktor nach dem Stand der Technik.
- Figur 2: zeigt schematisch Elemente eines Reaktors mit einer bevorzugten Ausgestaltung einer erfindungsgemäßen Vorrichtung zum Bestimmen einer Temperatur eines Reaktionsrohrs des Reaktors, die dazu eingerichtet ist, eine bevorzugte Ausführungsform des erfindungsgemäßen Verfahrens durchzuführen.
- Figur 3: zeigt schematisch ein Reaktionsrohr in einer Querschnittsansicht und einer Längssichtansicht mit Kalibrierelementen gemäß einer bevorzugten Ausführungsform der Erfindung.
- Figur 4: zeigt schematisch ein Kalibrierelement, welches jeweils im Rahmen einer bevorzugten Ausführungsform der Erfindung verwendet werden kann.

### Detaillierte Beschreibung der Zeichnung

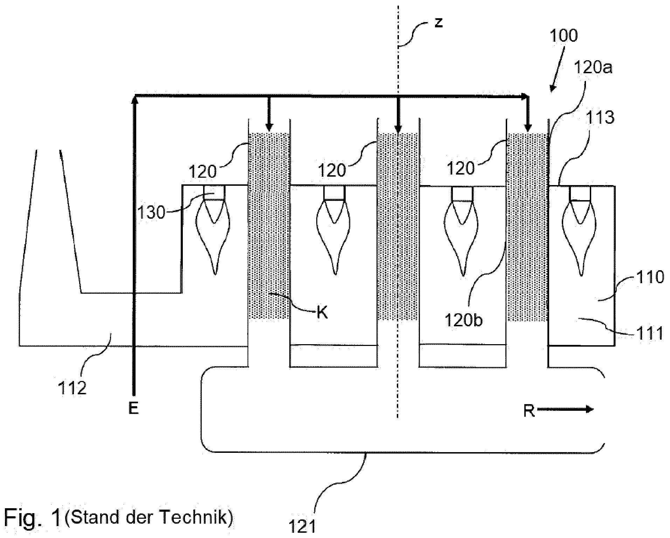

Figur 1 zeigt in einer schematischen Ansicht einen Reaktor 100 nach dem Stand der Technik. Beispielsweise kann der Reaktor 100 zur Dampfreformierung eines kohlenwasserstoffhaltigen Einsatzstromes E vorgesehen sein, der beispielsweise Methan aufweisen kann.

Der Reaktor 100 weist einen Ofen mit einer Brennkammer 110 auf, die eine Strahlungszone 111 sowie eine Konvektionszone 112 aufweist. In der Strahlungszone 111 sind z.B. an einer oberen horizontalen Wandung 113 der Brennkammer 110 Brenner 130 vorgesehen, die dazu ausgebildet sind, in der Brennkammer 110 bzw. Strahlungszone 111 einen Brennstoff in Gegenwart von Sauerstoff zu verbrennen, wobei die entstehende Wärme auf eine Mehrzahl von Reaktorrohren bzw. Reaktionsrohren 120 übertragen wird. Die Reaktionsrohre 120 erstrecken sich jeweils entlang einer vertikalen Längsachse z durch die Strahlungszone 111 der Brennkammer 110. Rein beispielhaft sind in Figur 1 drei derartige Reaktionsrohre 120 gezeigt. Es versteht sich, dass auch eine größere Anzahl von Reaktionsrohren vorgesehen sein kann oder beispielsweise auch nur ein Reaktionsrohr.

In den Reaktionsrohren 120 ist jeweils ein Katalysator K vorgesehen. Dieser kann sowohl in einem innerhalb der Brennkammer 110 verlaufenden Rohrabschnitt 120b des jeweiligen Reaktionsrohrs 120 vorgesehen sein also auch in einem jeweils oberhalb sowie außerhalb der Brennkammer 110 vorgesehen Rohrabschnitt 120a des jeweiligen Reaktionsrohrs 120.

Die in der Strahlungszone 111 erzeugte Wärme ist insbesondere so bemessen, dass der in die Reaktionsrohre 120 eingeleitete Einsatzstrom E, der insbesondere zuvor in der Konvektionszone 112 vorgeheizt wurde, in den Reaktionsrohren 120 unter Verwendung der besagten Wärme per Dampfreformierung zu einem Rohsynthesegasstrom R umgesetzt wird, der CO und H₂ aufweist.

Die Reaktionsrohre 120 münden dabei in einen unterhalb der Brennkammer 10 vorgesehenen Sammler 121, über den der erzeugte Rohsynthesegasstrom R aus dem Reaktor 100 bzw. den Reaktionsrohren 120 abgezogen werden kann.

Das reformierte Gas R verlässt die Strahlungszone 111 des Reaktors 100 beispielsweise in einem Temperaturbereich von 780°C bis 1050°C, ferner beispielsweise von 820°C bis 950°C. Der Druckbereich des Gases kann beispielsweise in einem Bereich von 10 bar bis 50 bar liegen, ferner beispielsweise von 15 bis 40 bar.

Für einen effizienten Betrieb eines derartigen Reaktors 100 sowie zur Bestimmung der verbleibenden Lebensdauer der einzelnen Reaktionsrohre 120 und des gesamten Reaktors 100 ist es von Bedeutung, die Rohrwandtemperaturen der Reaktionsrohre 120 möglichst genau bestimmen zu können.

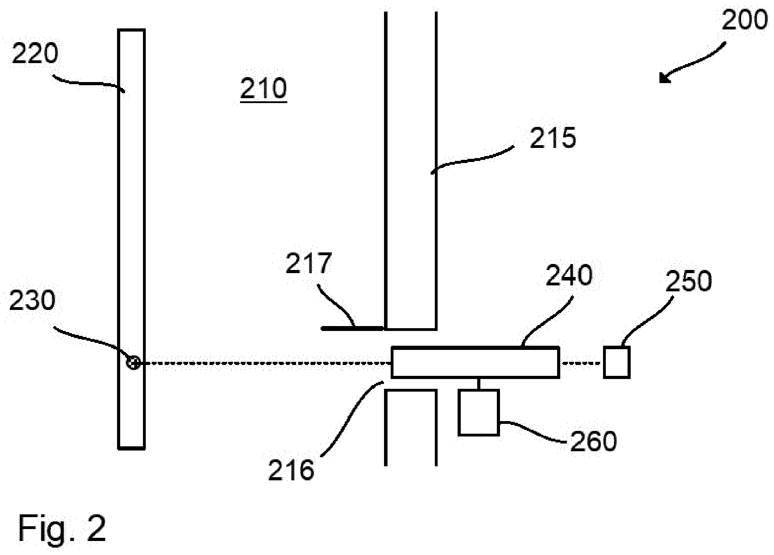

Um die Temperatur derartiger Reaktionsrohre eines Reaktors zu bestimmen, kann eine bevorzugte Ausgestaltung einer erfindungsgemäßen Vorrichtung verwendet werden, die dazu eingerichtet ist, eine bevorzugte Ausführungsform eines erfindungsgemäßen Verfahrens durchzuführen, wie nachfolgend in Bezug auf die Figuren 2 bis 4 erläutert wird.

Figur 2 zeigt schematisch Elemente eines Reaktors 200, der beispielsweise entsprechend dem in Figur 1 gezeigten Reaktor 100 ausgestaltet und z.B. zur Dampfreformierung eines kohlenwasserstoffhaltigen Einsatzstromes vorgesehen sein kann. Aus Gründen der Übersichtlichkeit ist der Reaktor 200 in einer stark vereinfachten Darstellung gezeigt. Beispielhaft ist in Figur 2 ein Reaktionsrohr 220 innerhalb einer Brennkammer 210 eines Ofens des Reaktors 200 gezeigt.

Erfindungsgemäß ist das Reaktionsrohr 220 an einer vorgegebenen Position bzw. Kalibrier-Position mit einem Kalibrierelement 230 versehen, wobei dieses Kalibrierelement 230 einen vorgegebenen bzw. bekannten Emissionskoeffizient aufweist. Dieses Kalibrierelement 230 stellt beispielsweise einen schwarzen Körper dar bzw. verhält sich wie ein schwarzer Körper und weist einen Emissionskoeffizienten mit dem Wert von eins oder zumindest im Wesentlichen mit dem Wert eins auf.

Ferner ist in einer Wand 215 der Brennkammer 210, insbesondere in einer Öffnung 216 innerhalb der Wand 215, ein Temperaturerfassungselement 240 vorgesehen. Die Öffnung 216 kann mit einer Klappe bzw. Abdeckung 217 verschlossen werden. Das Temperaturerfassungselement 240 kann beispielsweise als ein Pyrometer bzw. Strahlungsthermometer ausgebildet sein, welches eine emittierte Wärmestrahlung erfassen und auswerten kann.

Eine Verstelleinheit 260 ist vorgesehen, um eine Position und eine Ausrichtung des Temperaturerfassungselements 240 verstellen zu können, insbesondere dessen horizontale und vertikale Position bzw. Ausrichtung. Zweckmäßigerweise ist das Temperaturerfassungselement 240 mittels dieser Verstelleinheit 260 schwenkbar und drehbar gelagert, insbesondere jeweils um eine um horizontale Achse und eine vertikale Achse.

Mit Hilfe des Temperaturerfassungselements 240 wird eine Temperatur bzw. Kalibrier-Temperatur des Kalibrierelements 230 erfasst. In Abhängigkeit von dieser erfassten Temperatur des Kalibrierelements 230 wird die Temperatur des Reaktionsrohrs 220 bestimmt, insbesondere an der vorgegebenen Position. Zu diesem Zweck ist eine Temperaturbestimmungseinheit 250 vorgesehen, welche beispielsweise als eine Recheneinheit oder eine Steuereinheit des Reaktors 200 vorgesehen sein kann.

Beispielsweise kann die bestimmte Temperatur bzw. Kalibrier-Temperatur des Kalibrierelements 230 als Temperatur des Reaktionsrohrs 220 an der vorgegebenen Position angenommen werden. Ferner kann die Kalibrier-Temperatur des Kalibrierelements 230 verwendet werden, um Temperaturen des Reaktionsrohrs 220 an einer weiteren Position zu bestimmen.

Zu letzterem Zweck kann abhängig von der erfassten Temperatur des Kalibrierelements 230 mittels der Temperaturbestimmungseinheit 250 ein Korrekturwert bestimmt werden. Dabei wird zunächst mit dem Temperaturerfassungselement 240 eine Korrekturwerttemperatur an einer Korrekturwertposition des Reaktionsrohrs 220 erfasst, insbesondere in der Nähe des Kalibrierelements 230. Zu diesem Zweck kann die Ausrichtung bzw. die Position des Temperaturerfassungselement 240 mit Hilfe der Verstelleinheit 260 entsprechend verstellt werden. Abgängig von dieser erfassten Korrekturwerttemperatur sowie von der erfassten Temperatur des Kalibrierelements 230 wird der Korrekturwert bestimmt, welcher insbesondere einen Emissionskoeffizienten des Reaktionsrohrs 220 charakterisiert.

An einer Messposition des Reaktionsrohrs 220 wird dann mit dem Temperaturerfassungselement 240 eine nicht-korrigierte Temperatur erfasst. Diese Messposition kann eine zweckmäßige Position relativ zu dem Kalibrierelement darstellen. Auch zu diesem Zweck können die Ausrichtung und die Position des Temperaturerfassungselement 240 mit Hilfe der Verstelleinheit 260 entsprechend verstellt werden. Eine zweite Temperatur des Reaktionsrohrs 220 an der Messposition kann dann von der Temperaturbestimmungseinheit 250 abhängig von der erfassten nicht-korrigierten Temperatur und von dem bestimmten Korrekturwert bestimmt werden.

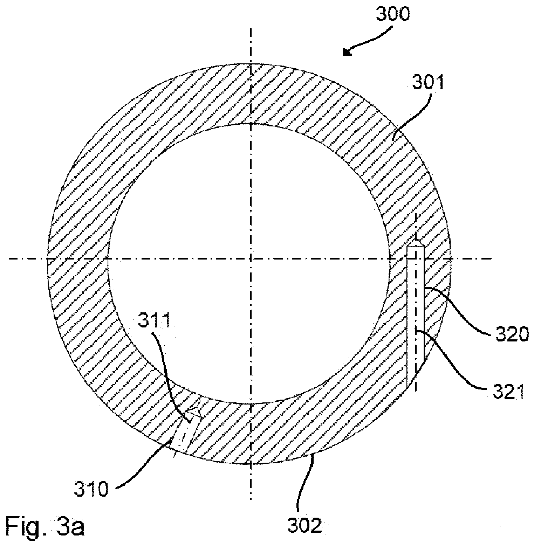

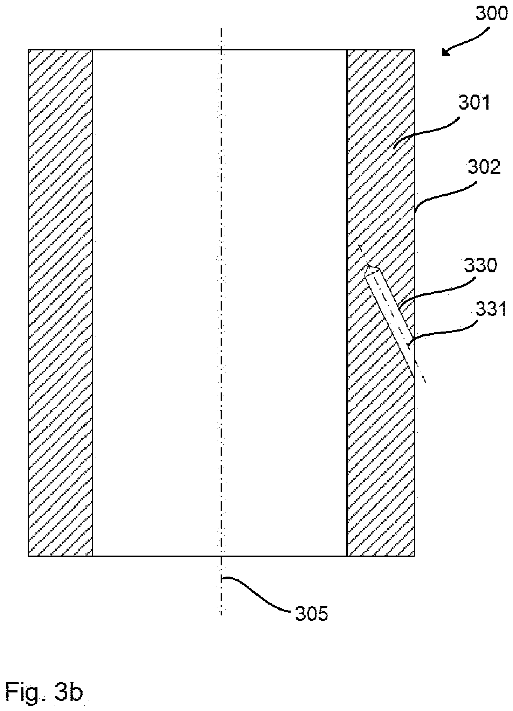

Um das Reaktionsrohr 220 mit dem Kalibrierelement 230 zu versehen kann gemäß einer bevorzugten Ausgestaltung der vorliegenden Erfindung eine Bohrung in einer Wand des Reaktionsrohrs 220 erzeugt werden, wie nachfolgend in Bezug auf Figur 3 erläutert wird

Die Figuren 3a und 3b zeigen jeweils ein Reaktionsrohr 300 in einer schematischen Quer- bzw. Längsschnittansicht, welches als Reaktionsrohr in dem Reaktor 200 gemäß Figur 2 verwendet werden kann.

Wie in den Figuren 3a und 3b gezeigt, können jeweils als ein Kalibrierelement 230 Bohrungen 310, 320, 330 in einer Wand 301 des Reaktionsrohrs 300 ausgehend von einer Oberfläche 302 dieser Wand 301 erzeugt werden.

Wie in Figur 3a gezeigt ist, kann als Kalibrierelement eine radiale Bohrung 310 in der Wand 301 in einer radialen Richtung 311 erzeugt werden, welche in einer Querschnittsebene des Reaktionsrohrs 300 auf dessen Mittelpunkt zu verläuft. Alternativ oder zusätzlich kann als Kalibrierelement eine tangentiale Bohrung 320 in der Wand 301 in einer tangentialen Richtung 321 erzeugt werden, welche ebenfalls in der Querschnittsebene des Reaktionsrohrs 300 verläuft.

Alternativ oder zusätzlich kann als Kalibrierelement, wie in Figur 3b gezeigt, eine Bohrung 330 in der Rohrwand 301 in radialer Richtung und in axialer Richtung des Reaktionsrohrs 300 erzeugt werden. Diese schräge Bohrung 330 verläuft in der Längsschnittebene des Reaktionsrohrs 300 entlang einer Richtung 331, welche Anteile in radialer und axialer Richtung aufweist und unter einem vorgegebenen Winkel gegenüber der zentralen Achse bzw. Längsachse 305 des Rohrs 300 verläuft.

Diese Bohrungen 310, 320, 330 stellen jeweils einen Hohlraumstrahler dar und weisen jeweils einen Emissionskoeffizienten von eins oder zumindest im Wesentlichen von eins auf. Insbesondere weisen die Bohrungen 310, 320, 330 zu diesem Zweck jeweils ein großes Verhältnis von Tiefe zu Durchmesser auf. Beispielsweise kann die Tiefe der jeweiligen Bohrung 310, 320, 330 jeweils mindestens zwei Mal, drei Mal, vier Mal oder fünf Mal so groß sein wie deren jeweiliger Durchmesser.

Alternativ oder zusätzlich kann als Kalibrierelement 230 an der jeweiligen vorgegebenen Position des Reaktionsrohrs 220 auch ein Ringelement, z.B. ein leicht verdickter Ring, auf die Oberfläche des Rohrs 220 aufgebracht werden, z.B. durch Schweißen, und in diesem Ringelement kann eine Bohrung erzeugt werden. Ferner kann als Kalibrierelement 230 an der jeweiligen vorgegebenen Position auch die Oberfläche des Rohrs 220 aufgeraut werden.

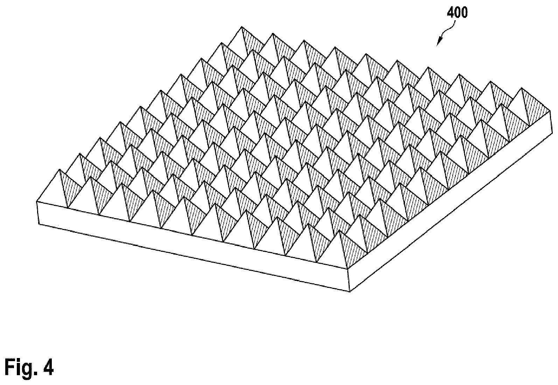

Alternativ oder zusätzlich kann gemäß einer bevorzugten Ausgestaltung der Erfindung als Kalibrierelement 230 an der jeweiligen vorgegebenen Position des Reaktionsrohrs 220 ein Formkörper aufgebracht werden, z.B. ein Flächenstrahlerelement, welcher beispielsweise in Figur 4 schematisch dargestellt und mit 400 bezeichnet ist. Durch die entsprechend modifizierte Oberfläche dieses Formkörpers 400 kann durch Mehrfach- bzw. Gegenreflexionen ein Emissionskoeffizient von nahezu eins erreicht werden.

### Bezugszeichenliste

- 100: Reaktor (Stand der Technik)
- 110: Brennkammer
- 111: Strahlungszone
- 112: Konvektionszone
- 113: obere horizontale Wandung
- 120: Reaktionsrohr
- 120a: außerhalb der Brennkammer verlaufender Rohrabschnitt
- 120b: innerhalb der Brennkammer verlaufender Rohrabschnitt
- 121: Sammler
- 130: Brenner
- E: Einsatzstromes
- K: Katalysator
- R: Rohsynthesegasstrom
- z: Längsachse

- 200: Reaktor
- 210: Brennkammer
- 215: Wand der Brennkammer
- 216: Öffnung in der Wand der Brennkammer
- 217: Klappe, Abdeckung
- 220: Reaktionsrohr
- 221: Wand des Reaktionsrohrs
- 222: Oberfläche der Wand des Reaktionsrohrs
- 230: Kalibrierelement
- 240: Temperaturerfassungselement
- 250: Temperaturbestimmungseinheit
- 260: Verstelleinheit

- 300: Reaktionsrohr
- 301: Wand des Reaktionsrohrs
- 302: Oberfläche der Wand des Reaktionsrohrs
- 305: Längsachse des Reaktionsrohrs
- 310: Kalibrierelement, radiale Bohrung
- 320: Kalibrierelement, tangentiale Bohrung
- 330: Kalibrierelement, schräge Bohrung

- 400: Formkörper, Flächenstrahlerelement

## Patentansprüche

1. Verfahren zum Bestimmen einer Temperatur eines Reaktionsrohrs (220, 300) eines Reaktors (200), welches zumindest teilweise innerhalb einer Brennkammer (210) eines Ofens angeordnet ist, aufweisend die Schritte:
Versehen einer vorgegebenen Position des Reaktionsrohrs (220, 300) mit einem Kalibrierelement (230, 310, 320, 330, 400), wobei dieses Kalibrierelement (230, 310, 320, 330, 400) einen vorgegebenen Emissionskoeffizienten aufweist;
Erfassen einer Temperatur des Kalibrierelements (230, 310, 320, 330, 400) mit einem Temperaturerfassungselement (240), welches in oder an einer Wand (215) der Brennkammer (210) des Ofens angeordnet ist;
Bestimmen der Temperatur des Reaktionsrohrs (220, 300) in Abhängigkeit von der erfassten Temperatur des Kalibrierelements (230, 310, 320, 330, 400).

2. Verfahren nach Anspruch 1, wobei die vorgegebene Position des Reaktionsrohrs (220, 300) mit einem schwarzen Körper als das Kalibrierelement (230, 310, 320, 330, 400) versehen wird oder mit einem Kalibrierelement (230, 310, 320, 330, 400), das sich zumindest im Wesentlichen wie ein schwarzer Körper verhält, insbesondere mit einem Hohlraumstrahler (310, 320, 330) und/oder einem Flächenstrahler (400).

3. Verfahren nach Anspruch 1 oder 2, wobei der vorgegebene Emissionskoeffizient des Kalibrierelements (230, 310, 320, 330, 400) den Wert eins oder zumindest im Wesentlichen eins besitzt.

4. Verfahren nach einem der vorstehenden Ansprüche, wobei das Versehen mit dem Kalibrierelement (230, 310, 320, 330, 400) aufweist:
Erzeugen einer Bohrung (310, 320, 330) in einer Wand (301) des Reaktionsrohrs (220, 300); und/oder
Aufbringen eines Formkörpers (400) auf einer Oberfläche (301) des Reaktionsrohrs (220, 300); und/oder
Aufrauen der Oberfläche (301) des Reaktionsrohrs (220, 300); und/oder
Aufbringen, insbesondere durch Schweißen, eines Ringelements auf der Oberfläche (301) des Reaktionsrohrs (220, 300) und Erzeugen einer Bohrung in dem Ringelement.

5. Verfahren nach Anspruch 4, wobei eine oder mehrere der nachfolgenden Bohrungen in der Wand (301) des Reaktionsrohrs (220, 300) erzeugt werden:
eine Bohrung (310) in einer radialen Richtung des Reaktionsrohrs (220, 300); und/oder
eine Bohrung (320) in einer tangentialen Richtung des Reaktionsrohrs (220, 300); und/oder
eine Bohrung (330) in radialer Richtung und in axialer Richtung des Reaktionsrohrs (220, 300).

6. Verfahren nach einem der vorstehenden Ansprüche, ferner aufweisend:
Bestimmen eines Korrekturwerts abgängig von der erfassten Temperatur des Kalibrierelements (230, 310, 320, 330, 400);
Bestimmen einer zweiten Temperatur des Reaktionsrohrs (220, 300) an einer Messposition in Abhängigkeit von dem bestimmten Korrekturwert.

7. Verfahren nach Anspruch 6, ferner aufweisend:
Erfassen einer nicht-korrigierten Temperatur an der Messposition des Reaktionsrohrs (220, 300);
Bestimmen der zweiten Temperatur des Reaktionsrohrs (220, 300) an der Messposition abhängig von der erfassten nicht-korrigierten Temperatur und von dem bestimmten Korrekturwert.

8. Verfahren nach Anspruch 6 oder 7, ferner aufweisend:
Erfassen einer Korrekturwerttemperatur an einer Korrekturwertposition des Reaktionsrohrs (220, 300) mit dem Temperaturerfassungselement (240);
Bestimmen des Korrekturwerts, insbesondere als ein Emissionskoeffizient des Reaktionsrohrs (220, 300), abgängig von der erfassten Temperatur des Kalibrierelements (230, 310, 320, 330, 400) und von der erfassten Korrekturwerttemperatur an der Korrekturwertposition.

9. Vorrichtung zum Bestimmen einer Temperatur eines Reaktionsrohrs (220, 300) eines Reaktors (200), welches zumindest teilweise innerhalb einer Brennkammer (210) eines Ofens angeordnet ist, aufweisend:
ein Temperaturerfassungselement (204), welches dazu eingerichtet ist, in oder an einer Wand (215) der Brennkammer (210) angeordnet zu werden, und welches dazu eingerichtet ist, eine Temperatur eines Kalibrierelements (230, 310, 320, 330, 400) zu erfassen, mit welchem eine vorgegebene Position des Reaktionsrohrs (220, 300) versehen ist und welches einen vorgegebenen Emissionskoeffizienten aufweist;
eine Temperaturbestimmungseinheit (250), die dazu eingerichtet ist, in Abhängigkeit von der erfassten Temperatur des Kalibrierelements (230, 310, 320, 330, 400) die Temperatur des Reaktionsrohrs (220, 300) zu bestimmen;
wobei die Vorrichtung dazu eingerichtet ist, ein Verfahren nach einem der vorstehenden Ansprüche durchzuführen.

10. Vorrichtung nach Anspruch 9, wobei das Temperaturerfassungselement (240) auf einer Verstelleinheit (260) angeordnet ist, die dazu eingerichtet ist, eine Position und/oder eine Ausrichtung des Temperaturerfassungselements (240) zu verstellen.

11. Vorrichtung nach Anspruch 9 oder 10, wobei das Temperaturerfassungselement (240) derart angeordnet ist, dass an einer Vielzahl von verschiedenen Messpositionen des Reaktionsrohrs (220, 300) jeweils eine Temperatur bestimmbar ist.

12. Vorrichtung nach einem der Ansprüche 9 bis 11, wobei das Temperaturerfassungselement (240) dazu eingerichtet ist, in einer insbesondere verschließbaren Öffnung (216) in der Wand (215) der Brennkammer (210) angeordnet zu werden.
